# EUROPÄISCHE PATENTSCHRIFT

(11) **EP 2 958 764 B1**
(45) Veröffentlichungstag und Bekanntmachung des Hinweises auf die Patenterteilung: **28.12.2016**
(21) Anmeldenummer: 14706782.1
(22) Anmeldetag: 20.02.2014
(51) Int. Cl.: B60H 1/00, F02N 11/08

(54) **VERFAHREN ZUM BETRIEB EINES KRAFTFAHRZEUGS BEI EINER VORKLIMATISIERUNG UND KRAFTFAHRZEUG**
METHOD FOR OPERATING A MOTOR VEHICLE WITH PRE-AIR CONDITIONING AND MOTOR VEHICLE
PROCÉDÉ POUR FAIRE FONCTIONNER UN VÉHICULE AUTOMOBILE AVEC PRÉ-CLIMATISATION ET VÉHICULE AUTOMOBILE

(30) Priorität: 22.02.2013 DE 102013003062
(43) Veröffentlichungstag der Anmeldung: 30.12.2015
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2014/000449
(87) Internationale Veröffentlichungsnummer: WO 2014/127915

(56) Entgegenhaltungen:
- US-A1- 2006 080 007
- US-A1- 2010 106 363
- US-B1- 6 745 582

## Beschreibung

Die Erfindung betrifft ein Verfahren zum Betrieb eines Kraftfahrzeugs, wobei durch ein Aktivierungssignal bei deaktiviertem Kraftfahrzeug eine durch einen Motor getriebene Klimatisierung des Kraftfahrzeugs durch wenigstens eine Klimatisierungseinrichtung begonnen wird, wobei der Motor für eine maximale Motorbetriebsdauer betrieben wird. Daneben betrifft die Erfindung ein Kraftfahrzeug.

Standheizungen bzw. Standklimatisierungseinrichtungen sind im Stand der Technik bereits weitgehend bekannt. Sie dienen dazu, ein Kraftfahrzeug bereits dann in Richtung eines vom Fahrer gewünschten Klimatisierungszustands zu bringen, wenn dieser das Kraftfahrzeug noch nicht in Betrieb genommen hat. In einer Verbesserung dieser Funktionalität wurde vorgeschlagen, auch durch einen Motor angetriebene bzw. den Motor nutzende Klimatisierungseinrichtungen bereits nutzbar zu machen, bevor der Fahrer das Kraftfahrzeug überhaupt betritt. Beispielsweise kann dafür eine Funkfernbedienung des Kraftfahrzeugs genutzt werden, welche ein entsprechendes Aktivierungssignal an das Kraftfahrzeug liefert. Im Kraftfahrzeug wird dann bzw. zu einer mit dem Aktivierungssignal gelieferten Zeit der Motor in Betrieb genommen. Gleiches gilt für die Klimatisierungseinrichtung, welche beginnt, das Kraftfahrzeug je nach Wunsch abzukühlen oder aufzuwärmen. So kann der Fahrer, wenn er dann zu dem Kraftfahrzeug gelangt, idealerweise das gewünschte Klima im Kraftfahrzeug vorfinden, wenigstens jedoch bereits ein vorklimatisiertes Kraftfahrzeug. Als Aktivierungssignal können selbstverständlich auch andere Signale verwendet werden, beispielsweise nach Art eines insbesondere an ein entsprechendes System des Fahrers gekoppelten Terminplaners, wobei die Klimatisierung auf bestimmte Termine hin erfolgt. Das Dokument US 2006/0080007 A1 zeigt ein Verfahren zum Planen eines Fern-Starts eines Motors eines Fahrzeugs. Das Fahrzeug umfasst eine Fernstartvorrichtung und eine Steuereinheit, welche mit einer Kommunikationsvorrichtung und mit der Fernstartvorrichtung gekoppelt ist. Die Fernstartvorrichtung reagiert auf Befehle der Steuereinheit. Das Verfahren umfasst einen Schritt eines Definierens eines Zeitplans von Startzeiten. Ein nächster Schritt umfasst Eingeben des Zeitplans in die Steuereinheit. Ein nächster Schritt umfasst ein Steuern eines Betriebs der Fernstartvorrichtung gemäß dem Zeitplan.

Bei solchen Betriebsverfahren beim (Vor)Klimatisieren eines Kraftfahrzeugs, insbesondere nach einem sogenannten "Remotestart", tritt jedoch das Problem auf, dass sich das Kraftfahrzeug in einem geschlossenen Raum, beispielsweise einer Garage, befinden kann. Wird nun der Motor aktiviert, treten Abgase auf, die in zu hohen Konzentrationen gefährlich sein können. Daher ist bei den bekannten Verfahren vorgesehen, den Klimatisierungszeitraum und mithin den Zeitraum, in dem der Motor betrieben wird, auf eine vorbestimmte, fixe, maximale Motorbetriebsdauer zu begrenzen.

Durch diese zeitliche Begrenzung ist die Klimatisierungsleistung jedoch extrem eingeschränkt. So kann es bei extremer Hitze oder Kälte dazu kommen, dass die Zieltemperatur der Klimatisierung nicht erreicht werden kann.

Der Erfindung liegt daher die Aufgabe zugrunde, eine Möglichkeit zur Klimatisierung eines Kraftfahrzeugs bei Verwendung eines Motors anzugeben, welche bei ungefährlichem Abgasausstoß eine Optimierung der Klimatisierungsleistung erlaubt.

Zur Lösung dieser Aufgabe ist bei einem Verfahren der eingangs genannten Art erfindungsgemäß vorgesehen, dass die Motorbetriebsdauer in Abhängigkeit einer Temperatur des Motors und/oder einer Umgebungstemperatur des Kraftfahrzeugs und/oder einer Temperatur einer Abgasanlage des Kraftfahrzeugs, insbesondere eines Katalysators, gewählt wird.

Es wird mithin vorgeschlagen, dass die Motorbetriebsdauer nicht fix festgelegt wird, sondern abhängig von der Außentemperatur, der Motortemperatur und/oder der Abgasanlagentemperatur gezielt so gewählt werden kann, dass dennoch keine Gefahr von hohen Schadstoffkonzentrationen besteht. Denn es wurde in Abgasmessungen festgestellt, dass mehr Abgas ausgestoßen wird, wenn die Außentemperatur niedrig ist, was auch gilt, wenn die Motortemperatur niedrig ist. Auch für die Abgasanlage wurde ein entsprechender Zusammenhang festgestellt. Hingegen wurde gemessen, dass bei einem warmen Motor, warmen Außentemperaturen bzw. einer warmen Abgasanlage deutlich weniger gefährliche Abgase ausgestoßen werden. Dies ermöglicht es nun, für bestimmte Fälle längere maximale Motorbetriebsdauern zu wählen, indem die genannten Temperaturen wenigstens teilweise ausgewertet werden. Dies erhöht den Komfort bezüglich der Vorklimatisierung, da Zieltemperaturen eher erreicht werden können, verringert aber gleichzeitig auch die Gefahr von hohen Schadstoffkonzentrationen, wenn sich das Kraftfahrzeug in einem geschlossenen Raum befindet. Mithin kann die extrem limitierte Zeit des Motorlaufes dadurch verlängert werden, dass die Temperaturen ausgewertet werden.

Dabei kann zweckmäßigerweise vorgesehen sein, dass mit steigender Temperatur des Motors und/oder steigender Umgebungstemperatur und/oder steigender Temperatur der Abgasanlage die Motorbetriebsdauer ansteigt. Dabei ist anzumerken, dass auch in Fällen tiefer Außentemperaturen noch längere Motorbetriebsdauern erreicht werden können, wenn der Motor, beispielsweise von einem vorangegangenen Betrieb, noch immer warm ist. Entsprechendes gilt auch für eine Abgasanlage.

Zweckmäßigerweise kann vorgesehen sein, dass die Motorbetriebsdauer aus wenigstens einer Kennlinie und/oder einem Kennfeld gewählt wird. Das Steuergerät, welches den Betrieb des Motors und der Klimatisierungseinrichtungen steuert und auch die maximale Motorbetriebsdauer bestimmt, kann mithin eine Speichereinrichtung aufweisen, in der geeignete Kennlinien und/oder Kennfelder vorhanden sind. Dort wird dann gegebenen gemessenen Temperaturen eine Motorbetriebsdauer zugeordnet. Es sei angemerkt, dass Temperatursensoren im Übrigen in bekannten Kraftfahrzeugen häufig ohnehin zumindest für den Motor und die Außentemperatur vorgesehen sind.

Die Motorbetriebsdauern können allgemein gesagt im Rahmen der vorliegenden Erfindung so gewählt werden, dass abhängig von der wenigstens einen Temperatur ein maximal zulässiger Abgasausstoß nicht überschritten wird. Insbesondere können beispielsweise verschiedene Grenzwerte für gefährliche Abgase bzw. Abgasstoffe definiert werden. Messungen ergeben, bei welchen Temperaturen welche Abgasmengen ausgestoßen werden, so dass hieraus geeignete, sichere Motorbetriebsdauern ermittelt werden können, die dann beispielsweise, wie beschrieben, in einer Kennlinie und/oder einem Kennfeld abgelegt werden können.

Neben dem Verfahren betrifft die Erfindung auch ein Kraftfahrzeug, umfassend einen Motor, eine durch den Motor treibbare Klimatisierungseinrichtung und ein Steuergerät, das zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin dieselben Vorteile erreicht werden können.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: einen Ablaufplan des erfindungsgemäßen Verfahrens, und
- Fig. 2: eine Prinzipskizze eines erfindungsgemäßen Kraftfahrzeugs.

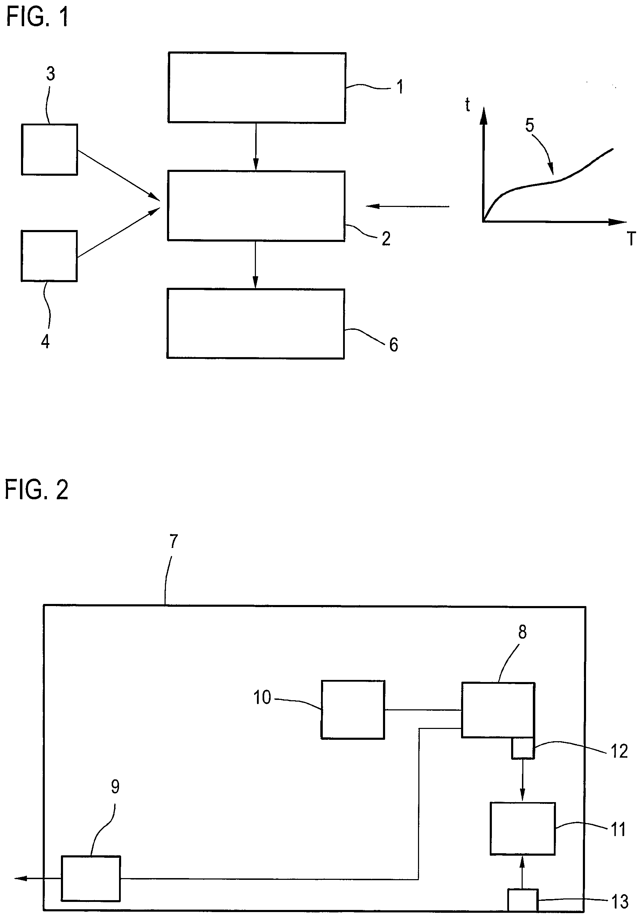

Fig. 1 zeigt einen Ablaufplan eines Ausführungsbeispiels des erfindungsgemäßen Verfahrens zur Vorklimatisierung eines Kraftfahrzeugs. Dabei wird in einem Schritt 1 ein Aktivierungssignal empfangen, im vorliegenden Ausführungsbeispiel von einer Funkfernbedienung. Dem Aktivierungssignal kann eine Zieltemperatur im Kraftfahrzeug zugeordnet sein, möglich ist es jedoch auch, diese Zieltemperatur aus einer bereits zuvor im Kraftfahrzeug vorgenommenen Einstellung zu ermitteln.

Sodann werden in einem Schritt 2 der Motor und wenigstens eine Klimatisierungseinrichtung, mit der die Zieltemperatur erreicht werden soll, beispielsweise Komponenten einer üblichen Klimatisierungsanlage, gestartet und es wird für den Fall, dass sich das Kraftfahrzeug in einem geschlossenen Raum befindet, eine maximale Motorbetriebsdauer ermittelt. Als Eingabewerte für diese Ermittlung erhält das das Verfahren durchführende Steuergerät in diesem Ausführungsbeispiel eine Temperatur 3 des Motors des Kraftfahrzeugs und eine Außentemperatur 4, die die Temperatur in der Umgebung des Kraftfahrzeugs wiedergibt. In einer Speichereinrichtung des Steuergeräts liegen nun Kennlinien 5 vor, aus denen in Abhängigkeit der Temperaturen 3, 4 eine maximale Motorbetriebsdauer abgeleitet werden kann, die dafür sorgt, dass ein maximal zulässiger Abgasausstoß nicht überschritten wird. Ersichtlich ergeben sich höhere maximale Motorbetriebsdauern, je höher die Temperatur ist, wobei t für die Motorbetriebsdauer steht, T für die Temperatur.

In einem Schritt 6 wird dann der Motor und somit auch die Klimatisierungseinrichtung wieder ausgeschaltet, wenn die maximale Motorbetriebsdauer erreicht ist.

Fig. 2 zeigt eine Prinzipsskizze eines erfindungsgemäßen Kraftfahrzeugs 7. Dieses weist einen Motor 8, hier einen Verbrennungsmotor, auf, dessen Abgase über eine Abgasanlage 9 das Kraftfahrzeug 7 verlassen. Das Kraftfahrzeug 7 weist ferner wenigstens eine Klimatisierungseinrichtung 10, beispielsweise eine Klimaanlage, auf.

Über ein Steuergerät 11, das zur Durchführung des erfindungsgemäßen Verfahrens ausgebildet ist, wird die Vorklimatisierung des Kraftfahrzeugs 7 als Reaktion auf ein Aktivierungssignal gesteuert. Das Steuergerät 11 kann also den Motor 8 und die Klimatisierungseinrichtung 10 aktivieren und dabei den Motor 8 für eine maximale Motorbetriebsdauer betreiben. Die maximale Motorbetriebsdauer wird in Abhängigkeit einer von einem Temperatursensor 12 gemessenen Temperatur 3 des Motors und einer von einem Temperatursensor 13 gemessenen Außentemperatur gewählt.

Auch an der Abgasanlage 9 kann ein Temperatursensor vorgesehen werden, welcher ein Eingangsdatum zur Bestimmung der maximalen Motorbetriebsdauer liefert.

Es sei an dieser Stelle noch angemerkt, dass selbstverständlich auch kürzere Motorbetriebsdauern als die maximale Motorbetriebsdauer denkbar sind, beispielsweise kann, wenn die Zieltemperatur bereits vor Ablauf der maximalen Motorbetriebsdauer erreicht wird, der Motor wieder abgeschaltet werden.

## Patentansprüche

1. Verfahren zum Betrieb eines Kraftfahrzeugs (7), wobei durch ein Aktivierungssignal bei deaktiviertem Kraftfahrzeug (7) eine durch einen Motor (8) getriebene Klimatisierung des Kraftfahrzeugs (7) durch wenigstens eine Klimatisierungseinrichtung (10) begonnen wird, wobei der Motor (8) maximal für eine maximale Motorbetriebsdauer betrieben wird, wobei die maximale Motorbetriebsdauer in Abhängigkeit einer Temperatur (3) des Motors (8) und/oder einer Umgebungstemperatur (4) des Kraftfahrzeugs (7) und/oder einer Temperatur einer Abgasanlage (9) des Kraftfahrzeugs (7), insbesondere eines Katalysators, gewählt wird, **dadurch gekennzeichnet,**
**dass** die maximale Motorbetriebsdauer so gewählt wird, dass abhängig von der wenigstens einen Temperatur (3, 4) ein maximal zulässiger Abgasausstoß nicht überschritten wird.

2. Verfahren nach Anspruch 1, **dadurch gekennzeichnet, dass** mit steigender Temperatur (3) des Motors (8) und/oder steigender Umgebungstemperatur (4) und/oder steigender Temperatur der Abgasanlage (9) die maximale Motorbetriebsdauer ansteigt.

3. Verfahren nach Anspruch 1 oder 2, **dadurch gekennzeichnet, dass** die maximale Motorbetriebsdauer aus wenigstens einer Kennlinie (5) und/oder einem Kennfeld gewählt wird.

4. Kraftfahrzeug (7), umfassend einen Motor (8), eine durch den Motor (8) treibbare Klimatisierungseinrichtung (10) und ein Steuergerät (11), das zur Durchführung eines Verfahrens nach einem der vorangehenden Ansprüche ausgebildet ist.

## Claims

1. Method for operating a motor vehicle (7), wherein, by means of an activation signal when the motor vehicle (7) is deactivated, the air conditioning of the motor vehicle (7) driven by a motor (8) is started by at least one air conditioning unit (10), wherein the motor (8) is maximally operated for a maximum motor operating period, wherein the maximum motor operating period is selected depending on a temperature (3) of the motor (8) and/or an ambient temperature (4) of the motor vehicle (7) and/or a temperature of the exhaust system (9) of the motor vehicle (7), in particular of a catalytic converter, **characterised in that** the maximum motor operating period is selected so that, depending on the at least one temperature (3, 4), a maximum permissible exhaust emissions level is not exceeded.

2. Method according to claim 1, **characterised in that**, as the temperature (3) of the motor (8) rises and/or as the ambient temperature (4) and/or the temperature of the exhaust system (9) rises, the maximum motor operating period increases.

3. Method according to claim 1 or 2, **characterised in that** the maximum motor operating period is selected from at least one characteristic curve (5) and/or one characteristic diagram.

4. Motor vehicle (7) comprising a motor (8), an air conditioning unit (10) which can be driven by the motor (8) and an electronic control unit (11) which is designed to execute a method according to one of the preceding claims.

## Revendications

1. Procédé pour le fonctionnement d'un véhicule automobile (7), une climatisation, entraînée par un moteur (8), du véhicule automobile (7) étant démarrée par au moins un dispositif de climatisation (10) par un signal d'activation lorsque le véhicule automobile (7) est désactivé, le moteur (8) fonctionnant au maximum pendant une durée maximale de fonctionnement de moteur, la durée maximale de fonctionnement de moteur étant choisie en fonction d'une température (3) du moteur (8) et/ou d'une température ambiante (4) du véhicule automobile (7) et/ou d'une température d'un système d'échappement (9) du véhicule automobile (7), en particulier d'un catalyseur,
**caractérisé en ce**
**que** la durée maximale de fonctionnement de moteur est choisie de telle sorte que, en fonction de l'au moins une température (3, 4), un rejet de gaz d'échappement maximal autorisé n'est pas dépassé.

2. Procédé selon la revendication 1, **caractérisé en ce que**, lorsque la température (3) du moteur (8) augmente et/ou lorsque la température ambiante (4) augmente et/ou lorsque la température du système d'échappement (9) augmente, la durée maximale de fonctionnement de moteur augmente.

3. Procédé selon la revendication 1 ou 2, **caractérisé en ce que** la durée maximale de fonctionnement de moteur est choisie à partir au moins d'une courbe caractéristique (5) et/ou d'un champ caractéristique.

4. Véhicule automobile (7), comprenant un moteur (8), un dispositif de climatisation (10) pouvant être entraîné par le moteur (8) et un appareil de commande (11), qui est réalisé pour la mise en oeuvre d'un procédé selon l'une quelconque des revendications précédentes.
